# EUROPEAN PATENT APPLICATION

(11) **EP 0 990 846 A1**
(43) Date of publication of application: **05.04.2000**
(21) Application number: 99830589.0
(22) Date of filing: 17.09.1999
(51) Int. Cl.: F23G 7/06, B01D 53/86

(54) **Catalytic pyrolisis apparatus for the cleaning of fumes**

(30) Priority: 02.10.1998 IT MI982127
(71) Applicant: Ariete di Ghirardello Sabrina, Montecalvo Versiggia (Pavia) (IT)
(72) Inventor: Bosco, Renato, 27049 Stradella (Pavia) (IT)
(74) Representative: Concone, Emanuele

(57) **Abstract**

A catalytic pyrolisis apparatus for the cleansing of fumes and combustion residue includes a body (C) made from a heat-insulating material with bottom and top bases (B, B') having central passages (P, P') for the inlet and outlet of the mixture of air and fumes, a resistor (R) to heat the mixture in a heating chamber (H) closed at the top by a catalyzer filter (S), an expansion chamber (L) between the filter (S) and the top base (B'), and also a protective means preventing the contact of the mixture with the resistor (R) and made from a material which is heat-conducting and resistant to the chemical-physical aggression of the substances contained in the mixture. The protective means may consist of an alumina tube (T) around which the resistor (R) is externally wound, or a quartz coating (Q) in which the resistor (R) is enclosed.

## Description

The present invention relates to plants for the depuration of fumes, and in particular to a catalytic pyrolisis apparatus for the cleansing of fumes and combustion residue.

It is known that conventional pyrolitic catalyzers substantially consist of a chamber, containing a heating resistor, through which the fumes to be purified pass together with air which is either sucked in or blown in. This gaseous mixture, after being heated, passes through a filter coated with one or more catalysts which promote the reaction for the cleansing of the polluting substances contained in said gaseous mixture.

The greatest drawback of such a conventional catalytic apparatus is the short life of the heating resistor caused by the chemical-physical aggression by the substances contained in the fumes to be treated. As a consequence, this type of apparatus requires a continuous maintenance, with high costs both for the replacement of the resistor and for the labour and stoppage time of the plant connected to the catalytic apparatus whose fumes are cleansed by the apparatus.

Moreover, this aggression of the resistor also reduces its heating efficiency even before its total destruction, whereby the apparatus presents a progressively reduced effectiveness in treating the fumes. Therefore the apparatus is not always able to achieve a temperature suitable for the complete cleansing of the fumes and/or it requires a higher consumption in order to reach a suitable treatment temperature.

Therefore the object of the present invention is to provide an apparatus which overcomes the above-mentioned drawbacks.

This object is achieved by means of an apparatus having the characteristics disclosed in claim 1. Other advantageous features are disclosed in the dependent claims.

The fundamental advantage of the apparatus according to the present invention is that it provides a complete protection of the heating resistor which therefore requires replacement only at very long intervals. A significant saving in material and labour is therefore achieved, as well as a desirable continuity of operation of the plant connected to the catalytic apparatus.

A further advantage of this apparatus stems from its capacity of maintaining a constant efficiency in time thanks to the perfect effectiveness of the resistor, whereby the cleansing performance is assured.

These and other advantages and characteristics of the apparatus according to the present invention will be clear to those skilled in the art from the following detailed description of two embodiments thereof, with reference to the annexed drawings wherein:
Fig.1 shows a diagrammatic vertical sectional view of a first embodiment of the present apparatus; and
Fig.2 shows a diagrammatic vertical sectional view of a second embodiment of said apparatus.

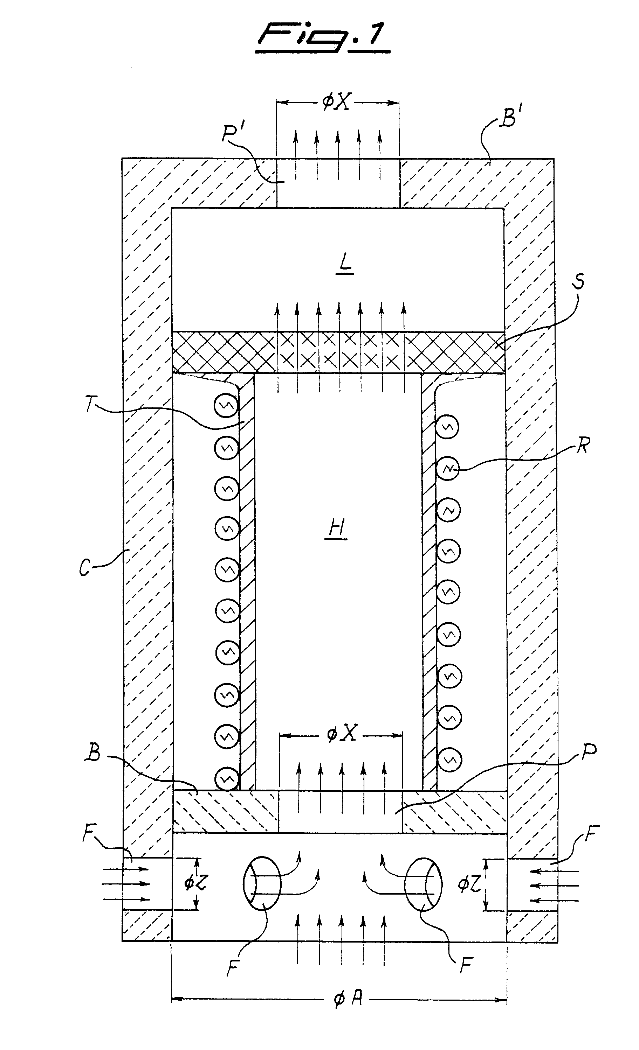

Referring to fig.1, there is seen that the apparatus consists of a cylindrical body C, made from a heat-insulating ceramic material, with a bottom base B and a top base B' having central passages P, P' respectively for the inlet and outlet of a gaseous mixture of air and fumes, the air being sucked in by "chimney effect" through a crown of holes F formed beneath the bottom base B.

The inner diameter A of the apparatus chamber is indicatively of 80 mm, the diameter X of the passages P, P' is indicatively of 35 mm, and the diameter Z of the air suction holes F is indicatively of 12 mm, these measures being provided only as a non-limiting example.

The mixture of air and gases enters a heating chamber H through the passage P in the bottom base B, is heated by a spiral resistor R, filtered through the catalyzer filter S, then expands in the expansion chamber L and finally leaves through the passage P' in the top base B'. The filter S is made from a ceramic material with a lamellar grid structure with 1,5 x 1,5 mm mesh, so as to cause a slowing of the gaseous flow and a subsequent increase of the catalytic reaction time.

The novel aspect of the apparatus according to the present invention is that the resistor R placed in the heating chamber H is not in direct contact with the gaseous mixture passing through said chamber. In fact, the resistor R is externally wound around a tube T made from a material (e.g. alumina) which is heat-conducting and resistant to the chemical-physical aggression of the polluting substances contained in the treated fumes. The tube T extends between the base B and the filter S so that the gaseous mixtures passes only inside it. In this way, the heat supplied by the resistor R still causes the heating of the gaseous mixture in the chamber H, but the aggression of the resistor R is prevented.

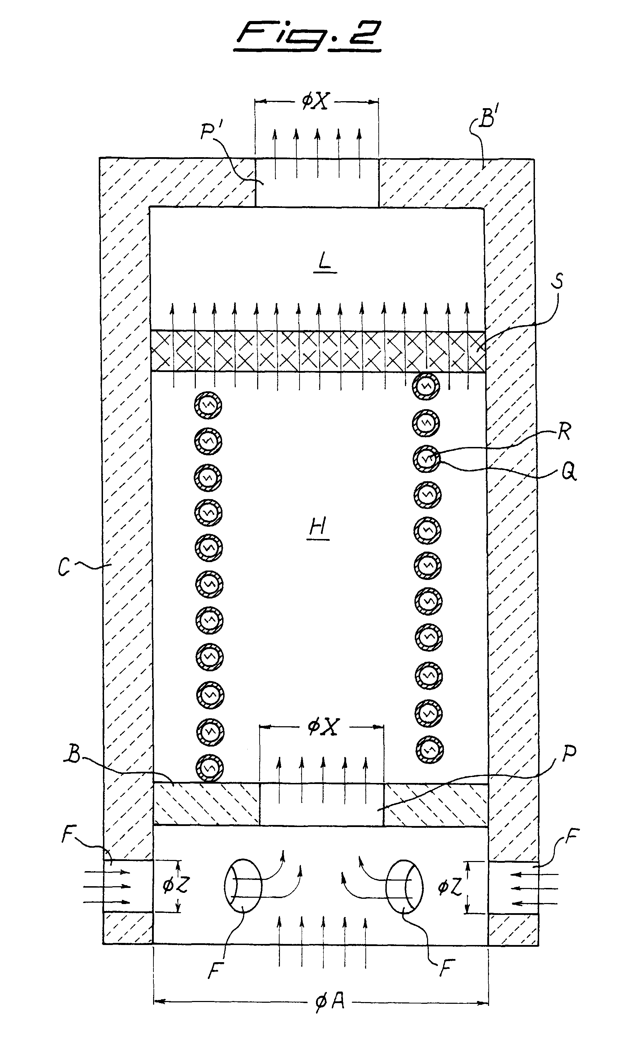

Fig.2 illustrates a second embodiment which is different from the previous one only in the protective means used to prevent the contact between the resistor R and the gaseous mixture. In this instance, the resistor R is enclosed in a coating Q which is also spiral-shaped and obviously made from a material (e.g. quartz) which is heat-conducting and resistant to the aggression by the fumes. This arrangement implies a structure a little more complicated than the previous one, but has the advantage of allowing the exploitation of the whole volume of the heating chamber H.

## Claims

1. A catalytic pyrolisis apparatus for the cleansing of fumes and combustion residue including a body (C) made from a heat-insulating material with bottom and top bases (B, B') having central passages (P, P') respectively for the inlet and outlet of a gaseous mixture of air and fumes, a resistor (R) suitable to heat said gaseous mixture in a heating chamber (H) closed at the top by a catalyzer filter (S), and an expansion chamber (L) between said filter (S) and the top base (B'), characterized in that it further includes a protective means preventing the contact of the gaseous mixture with said resistor (R), said protective means being made from a material which is heat-conducting and resistant to the chemical-physical aggression of the substances contained in the gaseous mixture.

2. A catalytic pyrolisis apparatus according to claim 1, characterized in that the protective means consists of a tube (T) extending between the bottom base (B) and the filter (S) whereby the gaseous mixture passes only therein, the resistor (R) being arranged externally around said tube (T).

3. A catalytic pyrolisis apparatus according to claim 2, characterized in that the tube (T) is made from alumina.

4. A catalytic pyrolisis apparatus according to claim 1, characterized in that the protective means consists of a coating (Q) in which the resistor (R) is enclosed.

5. A catalytic pyrolisis apparatus according to claim 4, characterized in that the coating (Q) is made from quartz.

6. A catalytic pyrolisis apparatus according to one or more of the preceding claims, characterized in that the filter (S) is made from a ceramic material with a lamellar grid structure.

7. A catalytic pyrolisis apparatus according to claim 6, characterized in that the mesh of the filter grid (S) has a 1,5 x 1,5 mm size.

8. A catalytic pyrolisis apparatus according to one or more of the preceding claims, characterized in that the air mixed with the fumes to be treated is sucked in by "chimney effect" through a crown of holes (F) formed beneath the bottom base (B).
